# EUROPEAN PATENT SPECIFICATION

(11) **EP 2 014 586 B1**
(45) Date of publication and mention of the grant of the patent: **10.03.2010**
(21) Application number: 08158169.6
(22) Date of filing: 12.06.2008
(51) Int. Cl.: B65G 33/14, B65G 33/32, F16J 15/40

(54) **Device for conveying loose products**
Vorrichtung zur Beförderung loser Produkte
Dispositif pour le transport de produits en vrac

(30) Priority: 09.07.2007 IT MN20070033
(43) Date of publication of application: 14.01.2009
(73) Proprietor: Mix s.r.l., 41032 Cavezzo (MO) (IT)
(72) Inventor: Pellacani, Guglielmo, 41032 Cavezzo MO (IT); Prati, Ermes, 41011 Campogalliano MO (IT); Marchesi, Loris, 41032 Cavezzo MO (IT)
(74) Representative: Modiano, Micaela Nadia

(56) References cited:
- DE-A1- 10 250 746
- US-A- 3 896 923
- US-A1- 2005 184 103

## Description

The present invention relates to a device for conveying loose products.

The enormous spread achieved by devices for conveying loose products in granular or powder form, comprising a ducted screw feeder which has, at one end, an actuation assembly and at least one support associated with a tube that contains such screw feeder, is known. A support at the opposite end with respect to the actuation assembly is always present, and for screw feeders of a certain length there is also an intermediate support to avoid excessive flexing of the shaft of the screw feeder.

The loose products subjected to the pressure of the screw of the screw feeder tend to be compacted, increasing the friction encountered and consequently causing a loss of efficiency of the device which leads to an increase in absorbed power.

Of course, at the output of the actuation assembly and at the portions comprised within the supports, the screw feeder shaft is provided with sealing elements which prevent the passage of the conveyed products, which would have extremely damaging consequences: accordingly, sealing elements of the most different types have been proposed which it is not appropriate to examine in detail here (see US-A-3 896 923, for example), such as for example labyrinth seals, or seals pressurized with a pneumatic line, or grease seals, all of which are not devoid of disadvantageous characteristics linked to constructive complexities, great need for maintenance, and the possibility of contamination of the conveyed products.

The aim of the present invention is to provide a conveyor of the type that comprises a ducted screw feeder which has maximum functional efficiency in treating the conveyed loose products and in which particular attention is paid to the effectiveness and preservation of the sealing elements.

This aim is achieved by a device for conveying loose products according to the invention, as defined in the appended claims.

Further characteristics and advantages of the present invention will become better apparent from the description of a preferred but not exclusive embodiment thereof, illustrated by way of non-limiting example in the accompanying drawings, wherein:
Figure 1 is a side view of the device for conveying loose products, with discontinuities for graphic reasons, and with the wall of the screw feeder containment tube removed;
Figure 2 is a view of the detail of the actuation assembly;
Figures 3 and 4 are views of the detail of the intermediate support and of the end support respectively.

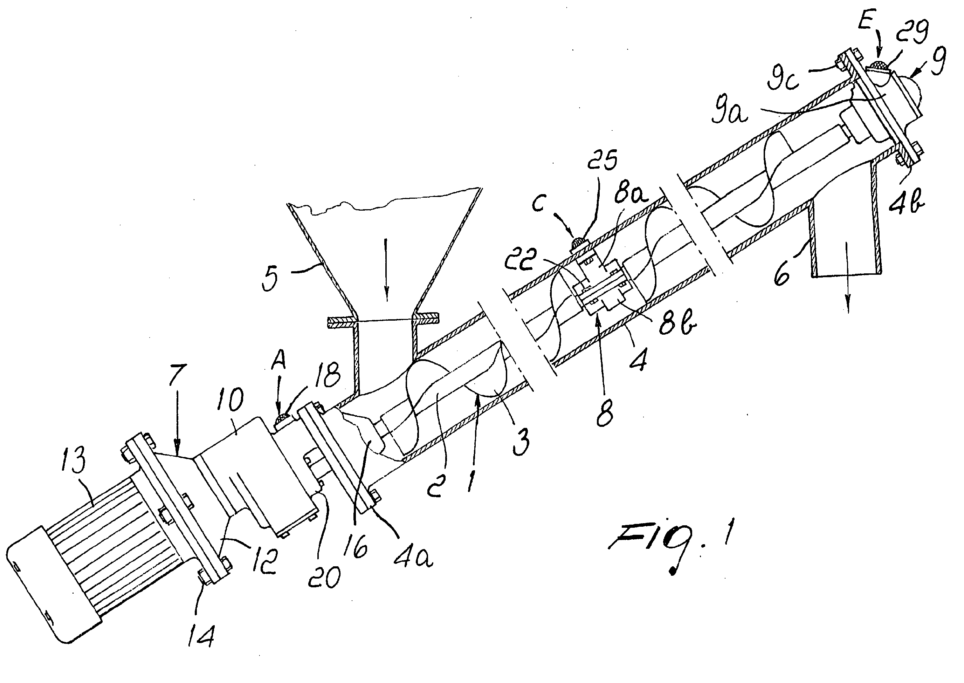

With reference to Figure 1, the reference numeral 1 generally designates a screw feeder, which comprises a shaft 2 for supporting a screw 3, which is contained within a containment tube 4 provided with flanges 4a, 4b at its ends; the reference numerals 5 and 6 designate respectively a loading port and a discharge port of the conveyed loose products.

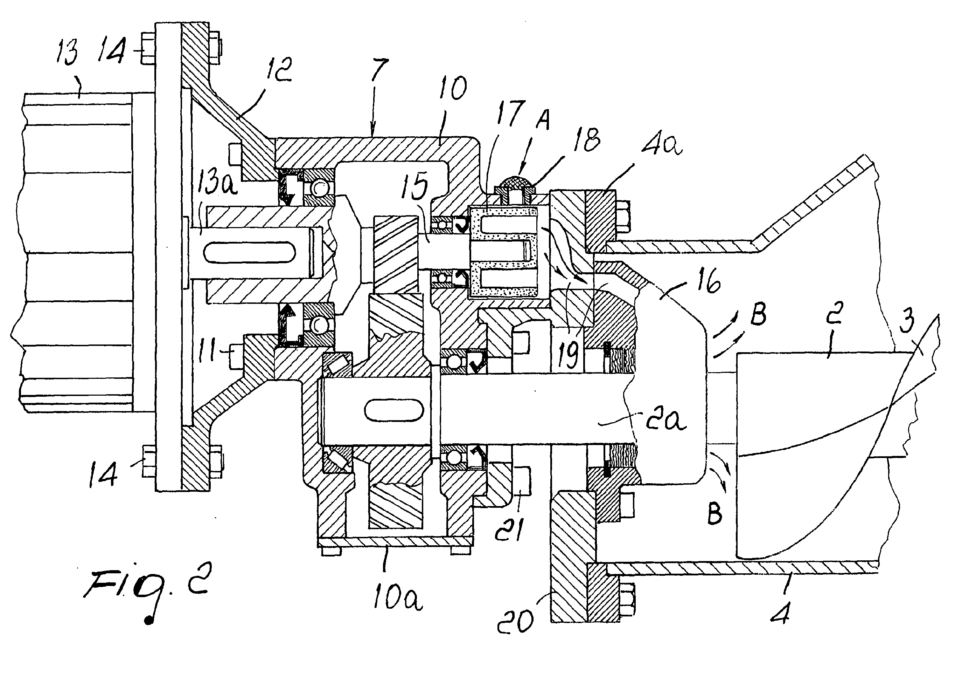

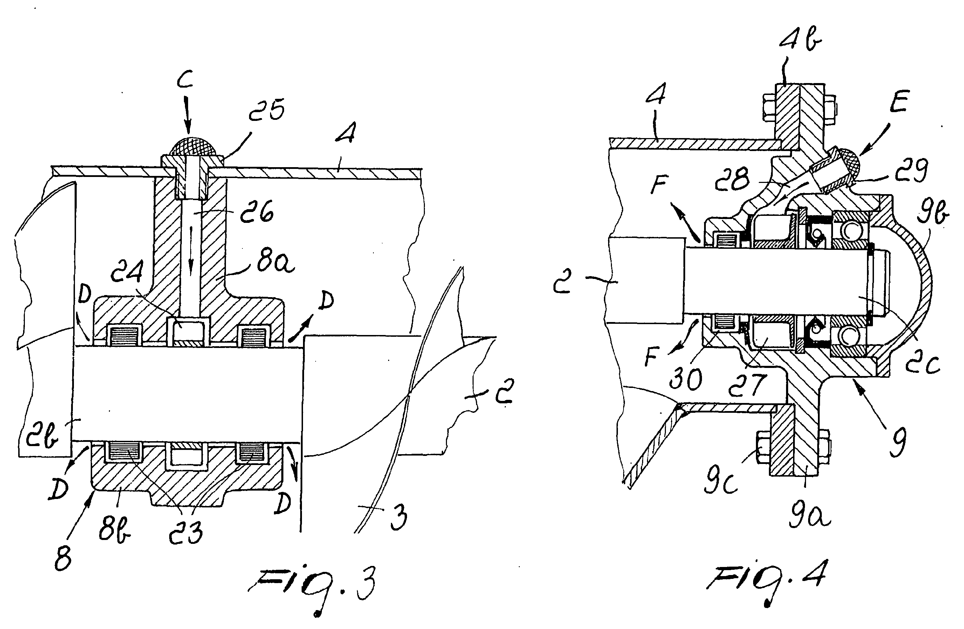

The screw feeder 1 has, at one end, an actuation assembly, generally designated by the reference numeral 7, which is described in detail with reference to Figure 2, and further has an intermediate support, generally designated by the reference numeral 8, and an end support, generally designated by the reference numeral 9, which will be described in detail with reference to Figures 3 and 4 respectively.

With reference to Figure 2, it can be seen that the actuation assembly 7 first of all comprises a gear-type reduction unit contained in a casing 10, which is connected, by means of screws 11, to a flange 12 for connection to an electric motor 13, to which such flange is fixed by means of bolts 14; the reference numeral 10a designates a cover for closing the casing 10.

A high-speed shaft 15 of the reduction unit is connected to an output shaft 13a of the electric motor 13 and a low-speed shaft of said reduction unit is constituted by a terminal 2a associated with the shaft 2 of the screw feeder, which is provided with sealing elements of the mechanical type, such as for example packings and labyrinths, comprised within a body 16, which are adapted to prevent the escape of the loose products from the containment tube 4.

A fan 17 is keyed to the high-speed shaft 15 of the reduction unit and is comprised within a seat provided within the casing 10 and aspirates atmospheric air by means of a perforated screw 18 provided with a filter, along the arrow A, and sends it into a channel 19 which is formed partly within a flange 20 which is fixed to the casing 10 by means of screws 21 and partly in the body 16 that accommodates the sealing elements; attention is called to the particular contour of the flange 20, which allows the evacuation by gravity of any product that has escaped the sealing elements comprised within the body 16.

The air in output from the fan enters, by following the arrows in Figure 2, the channel 19 to exit, by passing at least partly through the sealing elements comprised within the body 16, within the screw feeder containment tube 4, as indicated by the arrows B.

The effect of the air introduced along the arrows B is twofold.

First of all, it mixes with the conveyed loose product, applying a fluidifying effect of such product which reduces its friction in the path along the screw feeder, with positive consequences on the efficiency of the device, which will have reductions in power absorption; screw feeder wear will also decrease.

One must also consider the fact that such air keeps the loose material away from the sealing elements comprised within the body 16, increasing their efficiency; moreover, it cools the sealing elements by passing through them, and the sealing elements thus receive an advantageous effect as regards the increase in duration and the reduction in the need for maintenance.

With reference to Figure 3, the intermediate support 8 is now described in detail and comprises a body made of antifriction material which is formed by an upper half-shell 8a, which is associated with the tube 4 for containing the screw feeder, and by a lower half-shell 8b, which is connected to the half-shell 8a by means of bolts 22; moreover, labyrinth seals in contact with a portion 2b of the shaft 2 of the screw feeder comprised within the support are designated by the reference numeral 23.

A fan 24 is keyed to the portion 2b and receives atmospheric air, which has entered along the arrow C through a perforated screw with filter 25 and has been fed to the fan by a duct 26, in order to send it so that it passes through the labyrinth seals 23 and enters along the arrows D the tube 4, thus achieving the beneficial effects described earlier with reference to the air introduced in the screw feeder at the actuation assembly.

Figure 4 is a detailed view of the support 9 of the terminal 2c associated with the shaft 2, which comprises a body 9a, which is closed by a cover 9b and is associated with the flange 4b of the containment tube 4 of the screw feeder by means of bolts 9c.

A fan 27 is keyed to the terminal 2c of the shaft 2 and receives atmospheric air which has entered a duct 28 through a perforated screw with filter 29 according to the arrow E, and sends it so that it passes through the labyrinth seal 30 to enter the tube 4 along the arrows F; it is hardly necessary to mention once again the advantages achieved by such introduction of air into the screw feeder.

From all of the above, the great simplicity of the device according to the invention is evident; by having a direct intake of atmospheric air with means which use the energy of the motor comprised within the actuation assembly 7, it does not entail the presence of particular additional equipment with channels and control systems.

According to a variation of the invention, there are means capable of providing an additional injection of a gas, optionally constituted by an inert gas, if atmospheric air is incompatible with the conveyed product, in order to increase the fluidification of said product.

The described invention is susceptible of numerous modifications and variations, all of which are within the scope of the appended claims: thus, for example, the connection between the fan comprised within the actuation assembly and the corresponding seals can be obtained in any manner, by adopting for example a separate duct which is optionally provided by means of a flexible tube.

It is further obvious that the shape of the cross-section of the screw feeder containment tube may be any.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for conveying loose products, comprising a ducted screw feeder (1) which has at one end an actuation assembly (7) which comprises elements for sealing the conveyed products in contact with the shaft (2) of said screw feeder (1), and is further provided with at least one support (8,9) which is associated with a containment tube (4) in the presence of sealing elements, **characterized in that** it comprises means (17) which use the energy of a motor (13) comprised within said actuation assembly (7) and are adapted to aspirate atmospheric air to send it into said containment tube (4), passing at least partly through said sealing elements in contact with the shaft (2) of the screw feeder.

2. The device according to claim 1, **characterized in that** said means which use the energy of the motor (13) comprise a fan (17) which is comprised within the actuation assembly (7), is motorized thereby and is adapted to aspirate atmospheric air to send it into the screw feeder containment tube (4) by passing at least partly through the sealing elements of the conveyed product in contact with the shaft of said screw feeder.

3. The device according to claims 1 and 2, **characterized in that** said screw feeder (1) is a ducted screw feeder which has, at one end, said actuation assembly which comprises a gear-type reduction unit with a high-speed input shaft (15) connected to said motor (13) and a low-speed output shaft (2a) associated with the shaft of the screw feeder, said fan (17) being keyed on said high-speed shaft (15), a channel (19) being provided, within the actuation assembly, for feeding the air in output from the fan into the screw feeder containment tube, passing at least partly through the sealing elements in contact with said low-speed shaft.

4. The device according to claim 3, **characterized in that** the fan (17) keyed onto the high-speed shaft (15) of the reduction unit is accommodated within the casing (10) of said reduction unit, while the channel (19) for feeding air in output from the fan toward the containment tube of the screw feeder is provided in an initial portion, in a flange (20) which is interposed between said casing (10) and said tube (4) and, as regards the end portion, in a body for containing the sealing elements.

5. The device according to claim 1, **characterized in that** said at least one support comprises an intermediate support (8) of the shaft (2) of the screw feeder which is associated with the tube that contains said screw feeder and is provided with said elements for sealing the conveyed product in contact with said shaft, said means which use the energy of the motor being a fan keyed onto the portion of shaft that is comprised within the support and is adapted to receive atmospheric air to send it into the screw feeder containment tube, passing at least partly through said sealing elements.

6. The device according to claim 1, **characterized in that** said at least one support comprises an end support (9) of the screw feeder shaft which is associated with the containment tube of said screw feeder and is provided with said elements for sealing the conveyed product in contact with said shaft, said means which use the energy of the motor being a fan which is keyed to the end of the shaft that is comprised within the support and is adapted to receive atmospheric air to send it into the screw feeder containment tube, passing at least partly through said sealing elements.

7. The device according to one or more of the preceding claims, **characterized in that** the duct for conveying atmospheric air to the fan has, at the inlet, a perforated screw (18) provided with a filter (A).

8. The device according to one or more of the preceding claims, **characterized in that** it comprises means for injecting a gas which is conveyed by a pressurized line within the screw feeder containment tube (4).

## Patentansprüche

1. Vorrichtung zum Befördern loser Produkte, die einen Rohr-Schneckenförderer (1) umfasst, der an einem Ende eine Betätigungsanordnung (7) besitzt, die Elemente, die mit der Welle (2) des Schneckenförderers (1) in Kontakt sind, umfasst, um eine Abdichtung gegenüber den beförderten Produkten zu schaffen, und ferner versehen ist mit wenigstens einem Träger (8, 9), der einem Behälterrohr (4) in Gegenwart der Abdichtungselemente zugeordnet ist, **dadurch gekennzeichnet, dass** sie Mittel (17) umfasst, die die Energie eines in der Betätigungsanordnung (7) enthaltenen Motors (13) nutzen und dazu ausgelegt sind, Atmosphärenluft anzusaugen, um sie in das Behälterrohr (4) zu schicken, und wenigstens teilweise durch die Abdichtungselemente verlaufen, die mit der Welle (2) des Schneckenförderers in Kontakt sind.

2. Vorrichtung nach Anspruch 1, **dadurch gekennzeichnet, dass** die Mittel, die die Energie des Motors (13) nutzen, ein Gebläse (17) umfassen, das in der Betätigungsanordnung (7) enthalten ist und durch jenes angetrieben wird und dazu ausgelegt ist, Atmosphärenluft anzusaugen, um sie in das Schneckenförderer-Behälterrohr (4) zu schicken, indem es die Luft wenigstens teilweise durch die Mittel für die Abdichtung des beförderten Produkts, die mit der Welle des Schneckenförderers in Kontakt sind, bewegt.

3. Vorrichtung nach Anspruch 1 und 2, **dadurch gekennzeichnet, dass** der Schneckenförderer (1) ein Rohr-Schneckenförderer ist, der an einem Ende die Betätigungsanordnung besitzt, die eine Getriebe-Untersetzungseinheit mit einer Hochdrehzahl-Eingangswelle (15) die mit dem Motor (13) verbunden ist, und einer Niederdrehzahl-Ausgangswelle (2a), die der Welle des Schneckenförderers zugeordnet ist, enthält, wobei das Gebläse (17) auf der Hochdrehzahlwelle (15) verkeilt ist, wobei in der Betätigungsanordnung ein Kanal (19) vorgesehen ist, um die Luft, die vom Gebläse abgegeben wird, in das Schneckenförderer-Behälterrohr zu liefern und sie wenigstens teilweise durch die Abdichtungsmittel zu bewegen, die mit der Niederdrehzahlwelle in Kontakt sind.

4. Vorrichtung nach Anspruch 3, **dadurch gekennzeichnet, dass** das Gebläse (17), das auf der Hochdrehzahlwelle (15) der Untersetzungseinheit verkeilt ist, in dem Gehäuse (10) der Untersetzungseinheit aufgenommen ist, während ein Anfangsabschnitt des Kanals (19) für die Zuführung von vom dem Gebläse abgegebenen Luft zu dem Behälterrohr des Schneckenförderers in einem Flansch (20) vorgesehen ist, der zwischen das Gehäuse (10) und das Rohr (4) eingefügt ist, und ein Endabschnitt in einem Körper, der die Abdichtungselemente enthält, vorgesehen ist.

5. Vorrichtung nach Anspruch 1, **dadurch gekennzeichnet, dass** der wenigstens eine Träger einen Zwischenträger (8) für die Welle (2) des Schneckenförderers umfasst, der dem Rohr zugeordnet ist, das den Schneckenförderer enthält, und mit den Elementen zum Abdichten des beförderten Produkts, die mit der Welle in Kontakt sind, versehen ist, wobei die Mittel, die die Energie des Motors nutzen, ein Gebläse sind, das auf dem in dem Träger enthaltenen Abschnitt der Welle verkeilt ist und dazu ausgelegt ist, Atmosphärenluft aufzunehmen, um sie in das Schneckenförderer-Behälterrohr zu schicken und sie wenigstens teilweise durch die Abdichtungsmittel zu bewegen.

6. Vorrichtung nach Anspruch 1, **dadurch gekennzeichnet, dass** der wenigstens eine Träger einen Endträger (9) für die Schneckenfördererwelle enthält, der dem Behälterrohr des Schneckenförderers zu geordnet ist und der mit dem Elementen zum Abdichten des beförderten Produkts, die mit der Welle in Kontakt sind, versehen ist, wobei die Mittel, die die Energie des Motors nutzen, ein Gebläse sind, das auf dem in dem Träger enthaltenen Ende der Welle verkeilt ist und dazu ausgelegt ist, Atmosphärenluft aufzunehmen, um sie in das Schneckenförderer-Behälterrohr zu schicken und sie wenigstens teilweise durch die Abdichtungselemente zu bewegen.

7. Vorrichtung nach einem oder mehreren der vorhergehenden Ansprüche, **dadurch gekennzeichnet, dass** das Rohr für die Beförderung von Atmosphärenluft zu dem Gebläse am Einlass eine durchlochte Schraube (18) besitzt, die mit einem Filter (A) versehen ist.

8. Vorrichtung nach einem oder mehreren der vorhergehenden Ansprüche, **dadurch gekennzeichnet, dass** sie Mittel umfasst, um ein Gas, das durch eine Druckleitung in das Schneckenförderer-Behälterrohr (4) transportiert wird, einzuleiten.

## Revendications

1. Dispositif pour convoyer des produits en vrac, comprenant un extracteur à vis (1) dans un conduit, qui comporte, à une extrémité, un ensemble d'actionnement (7), qui comprend des éléments pour amener les produits convoyés en contact étanche avec l'arbre (2) dudit extracteur à vis (1), et qui est de plus muni d'au moins un support (8, 9) qui est associé à un tube de confinement (4) en présence d'éléments d'étanchéité, **caractérisé en ce qu'**il comprend des moyens (17) qui utilisent l'énergie d'un moteur (13) inclus à l'intérieur dudit ensemble d'actionnement (7) et qui sont adaptés pour aspirer de l'air atmosphérique afin de l'envoyer dans ledit tube de confinement (4), traversant au moins partiellement lesdits éléments d'étanchéité en contact avec l'arbre (2) de l'extracteur à vis.

2. Dispositif selon la revendication 1, **caractérisé en ce que** lesdits moyens qui utilisent l'énergie du moteur (13) comprennent un ventilateur (17) qui est inclus à l'intérieur de l'ensemble d'actionnement (7), qui est motorisé par celui-ci et qui est adapté pour aspirer de l'air atmosphérique afin de l'envoyer à l'intérieur du tube de confinement de l'extracteur à vis (4) en traversant au moins partiellement les éléments d'étanchéité du produit convoyé en contact avec l'arbre dudit extracteur à vis.

3. Dispositif selon les revendication 1 et 2, **caractérisé en ce que** ledit extracteur à vis (1) est un extracteur à vis dans un conduit, qui comporte, à une extrémité, ledit ensemble d'actionnement, qui comprend une unité réductrice du type à engrenages avec un arbre d'entrée à haute vitesse (15) relié audit moteur (13) et un arbre de sortie à basse vitesse (2a) associé à l'arbre de l'extracteur à vis, ledit ventilateur (17) étant fixé sur ledit arbre à haute vitesse (15), un canal (19) étant disposé, à l'intérieur de l'ensemble d'actionnement, pour délivrer l'air en sortie du ventilateur à l'intérieur du tube de confinement de l'extracteur à vis, traversant au moins partiellement les éléments d'étanchéité en contact avec ledit arbre à basse vitesse.

4. Dispositif selon la revendication 3, **caractérisé en ce que** le ventilateur (17) fixé sur l'arbre à haute vitesse (15) de l'unité réductrice est reçu à l'intérieur du carter (10) de ladite unité réductrice, tandis que le canal (19) pour délivrer de l'air en sortie du ventilateur vers le tube de confinement de l'extracteur à vis est disposé, dans une partie initiale, dans un flasque (20) qui est interposé entre ledit carter (10) et ledit tube (4), et, en ce qui concerne la partie d'extrémité, dans un corps pour contenir les éléments d'étanchéité.

5. Dispositif selon la revendication 1, **caractérisé en ce que** ledit support au nombre d'au moins un comprend un support intermédiaire (8) de l'arbre (2) de l'extracteur à vis qui est associé au tube qui contient ledit extracteur à vis et est muni desdits éléments d'étanchéité du produit convoyé en contact avec ledit arbre, lesdits moyens qui utilisent l'énergie du moteur étant un ventilateur fixé sur la partie d'arbre qui est incluse à l'intérieur du support et qui est adapté pour recevoir de l'air atmosphérique afin de l'envoyer à l'intérieur du tube de confinement de l'extracteur à vis, traversant au moins partiellement lesdits éléments d'étanchéité.

6. Dispositif selon la revendication 1, **caractérisé en ce que** ledit support au nombre d'au moins un comprend un support d'extrémité (9) de l'arbre de l'extracteur à vis qui est associé au tube de confinement dudit extracteur à vis et qui est muni desdits éléments d'étanchéité du produit convoyé en contact avec ledit arbre, lesdits moyens qui utilisent l'énergie du moteur étant un ventilateur qui est fixé à l'extrémité de l'arbre qui est inclus l'intérieur du support et qui est adapté pour recevoir de l'air atmosphérique afin de l'envoyer à l'intérieur du tube de confinement de l'extracteur à vis, traversant au moins partiellement lesdits éléments d'étanchéité.

7. Dispositif selon l'une ou plusieurs des revendications précédentes, **caractérisé en ce que** le conduit pour convoyer l'air atmosphérique vers le ventilateur comporte, à l'orifice d'entrée, une vis perforée (18) munie d'un filtre (A).

8. Dispositif selon l'une ou plusieurs des revendications précédentes, **caractérisé en ce qu'**il comprend des moyens pour injecter un gaz qui est convoyé par une ligne sous pression à l'intérieur du tube de confinement de l'extracteur à vis (4).
